# EUROPEAN PATENT SPECIFICATION

(11) **EP 4 316 713 B1**
(45) Date of publication and mention of the grant of the patent: **17.12.2025**
(21) Application number: 23749752.4
(22) Date of filing: 31.01.2023
(51) Int. Cl.: B23B 31/08, B23C 3/12, B24B 9/00, B23Q 5/04, B23Q 1/32, F16C 3/02, F16D 3/223, F16D 3/24, F16C 17/02, F16C 23/04

(54) **PROCESSING TOOL**
BEARBEITUNGSWERKZEUG
OUTIL DE TRAITEMENT

(30) Priority: 01.02.2022 JP 2022014457
(43) Date of publication of application: 07.02.2024
(73) Proprietor: Kato Mfg. Co., Ltd., Hiratsuka-shi, Kanagawa, 254-0076 (JP)
(72) Inventor: MATSUMOTO, Hirokazu, Hiratsuka-shi, Kanagawa 254-0076 (JP)
(74) Representative: Geskes, Christoph
(86) International application number: PCT/JP2023/003099
(87) International publication number: WO 2023/149436

(56) References cited:
- GB-A- 2 097 299
- JP-A- 2001 287 122
- JP-A- 2001 328 066
- JP-A- 2019 111 593
- JP-A- H05 131 327
- US-A- 1 782 633

## Description

### Technical Field

The present invention relates to a machining tool, and more specifically, relates to a machining tool that is suitable as a holder for deburring tools by which the wear of sliding parts is significantly reduced.

### Background Art

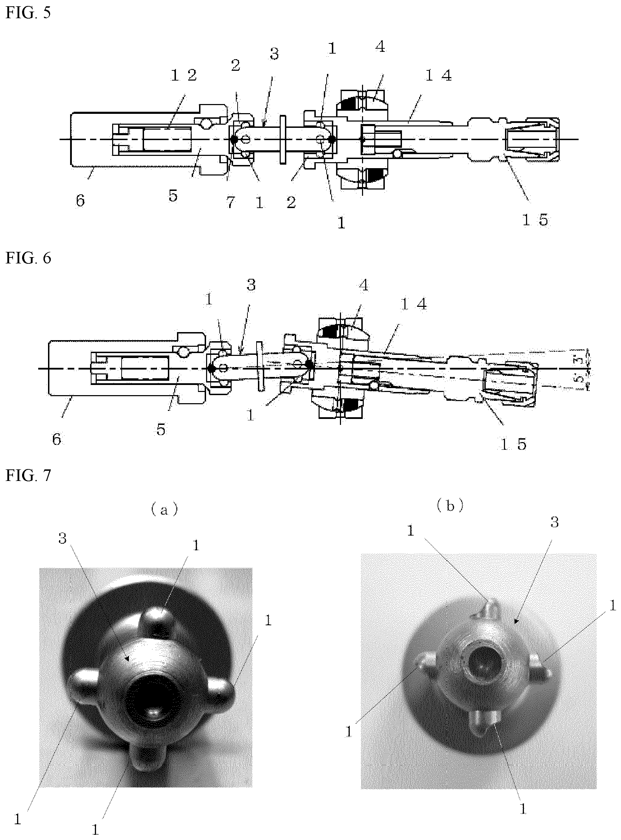

The applicant of the present invention proposed a machining tool used for deburring in Patent Document 1 (Japan Unexamined Patent Application Publication No. 2005-349549). Shown in FIG. 5 is the Second Embodiment of Patent Document 1, referred to as FIG. 9 in the Document. The machining tool shown in FIG. 5 is provided with a universal joint rod 3 inside the tool. In FIG. 5, a case covering the outside of a spherical bearing is omitted. FIG. 6 is an internal structure diagram that shows a state in which a conventional main drive shaft 14 and holder 15 shown in FIG. 5 are tilted. Referring to FIG. 6, the machining tool operates such that the universal joint rod 3 can tilt 3° upward to the right in the drawing, and the main drive shaft 14 and the holder 15 can tilt 5° downward to the right in the drawing. FIGS. 7(a) and 7(b) are photographs showing a new article and a worn-out article of the conventional universal joint rod 3. Referring to FIG. 7(b), pins 1, which are provided to protrude from the universal joint rod 3, have worn out due to friction with pin grooves 2. The tips of the pins 1 in FIG. 7(b) are significantly chipped away compared to the new pins 1 in FIG. 7(a). Such wear causes the tilting action of the machining tool to be less smooth, and makes it impossible to transmit the driving force, which is the main function to be achieved by the machining tool. This necessitates earlier replacement of engaging parts, although the timing of replacement depends on the size of the load.

A machining tool as per the preamble of claim 1 is known from GB2097299A.

### Prior-art Document

### Patent Document

Patent Document 1: Japanese Unexamined Patent Application Publication No. 2005-349549

### Technical Problem

The present invention was made to address the problems, and the object of the present invention is to provide a machining tool that causes little wear at engaging parts between a main drive shaft and a driving shaft even if the main drive shaft is tilted.

### Solution to Problem

A machining tool is provided that includes an upper shaft (6) that is to be attached to a host device, through which torque is transmitted, a driving shaft (5) that is to be inserted into the upper shaft (6) to extend along the axis of the upper shaft (6), a main drive shaft (14) that is to be attached to a head of the driving shaft (5), a holder (15) that is to be inserted into a head of the main drive shaft (14), to which a cutting tool (9) is attached, a spherical bearing (4) that supports an outer side of the main drive shaft (14) so that the main drive shaft (14) is tiltable, a center steel ball (7) that is provided to be sandwiched between a depression in the center of the head of the driving shaft (5) and an opposite depression in the center of the rear end of the main drive shaft (14), and multiple axial steel balls (10) that are provided to long grooves (11) on the outer surface of the head of the driving shaft (5), and provided to holes (18) of the main drive shaft (14).

According to an embodiment, the machining tool further includes a spring (12) that biases the driving shaft (5) in the axial direction, wherein the center (8) of the center steel ball (7) is positioned to be offset to the cutting tool (9) from the center (13) of the spherical bearing (4).

### Advantageous Effects of the Invention

The machining tool of the present invention includes a center steel ball to be sandwiched between a depression in the center of the head of a driving shaft and a depression in the center of the rear end of a main drive shaft, and multiple axial steel balls to be fitted to long grooves of the driving shaft and holes of a main drive shaft. Because the center steel ball and axial steel balls reduce friction occurring at engaging parts between the driving shaft and the main drive shaft even if the main drive shaft is tilted, the machining tool of the present invention can reduce the wear at the engaging parts. The machining tool of the present invention eliminates the use of a universal joint rod because the center steel ball and axial steel balls are provided to be fitted into the driving shaft and the main drive shaft. This configuration allows a holder along with the main drive shaft to be tilted at a predetermined angle with respect to the driving shaft.

If the center of the center steel ball is positioned to be offset to the cutting tool from the center of the spherical bearing, the transition of the main drive shaft from the tilted state to the unloaded state allows the central axis of the drive shaft to be aligned with that of the main drive shaft linearly. A spring presses the driving shaft, the center steel ball, and the main drive shaft, which allows the central axis of the driving shaft to be aligned with that of the main drive shaft linearly.

### Brief Description of Drawings

FIG. 1 is an internal structure diagram of a machining tool according to the present invention.
FIG. 2 is an internal structure diagram that shows a state in which a main drive shaft and a holder in FIG. 1 are tilted.
FIG. 3 shows a drive shaft and the main drive shaft, in which the drive shaft is to be inserted into the main drive shaft as shown in FIG. 1.
FIG. 4(a) is an enlarged internal view of a spherical bearing where the main drive shaft and the holder shown in FIG. 1 are tilted, and FIG. 4(b) is a diagram showing the arrangement of axial steel balls.
FIG. 5 is an internal structure diagram of a conventional machining tool.
FIG. 6 is an internal structure diagram that shows a state in which a conventional main drive shaft and holder shown in FIG. 5 are tilted.
FIG. 7(a) is a photograph showing a new article of a conventional universal joint rod, and FIG. 7(b) is a photograph showing a worn-out article of a conventional universal joint rod.

### Description of the Embodiments

### Example

Hereinafter, a machining tool according to the present invention will be described in detail with reference to the accompanying drawings.

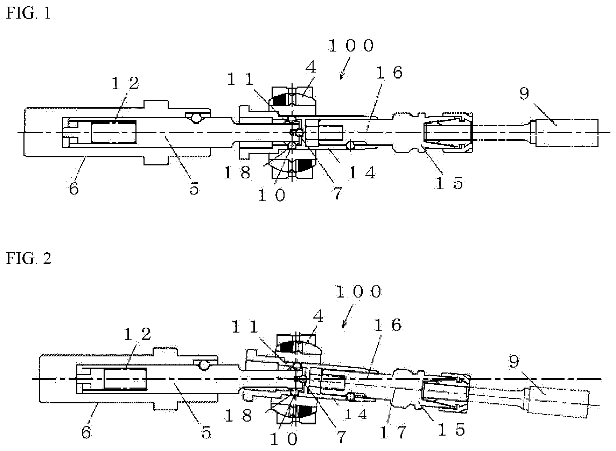

FIG. 1 is an internal structure diagram of a machining tool 100 according to the present invention. An upper shaft 6 is configured to be detachably attached to a host device such as a working machine or a robot, through which torque is transmitted. A driving shaft 5 is inserted into the upper shaft 6 to extend along the axis of the upper shaft 6. A main drive shaft 14 is attached to the head of the driving shaft 5 at the rear end thereof, and a holder 15 is attached to the head of the main drive shaft 14. A cutting tool 9 is attached to the head of the holder 15. A spherical bearing 4 is provided to support the outer side of the main drive shaft 14 so that the main drive shaft 14 is tiltable. A cover (not shown) is provided to envelop the portions from the upper shaft 6 to the spherical bearing 4.

FIG. 2 is an internal structure diagram that shows a state in which the main drive shaft 14 and the holder 15 in FIG. 1 are tilted. The main drive shaft 14 and the holder 15 tilt up to approximately 5°. A tilt axis 17 of the main drive shaft 14 and the holder 15, which is shown by a dot-dashed line, tilts up to approximately 5° relative to a central axis 16 of the driving shaft 5, which is also shown by a dot-dashed line. A depression is provided in the center of the head of the driving shaft 5 and in the center of the rear end of the main drive shaft 14. A center steel ball 7 is provided to be sandwiched between the depression of the driving shaft 5 and the opposite depression of the main drive shaft 14. Long grooves 11 are provided on the outer surface of the head of the driving shaft 5, and multiple holes 18 are provided on the main drive shaft 14. Multiple axial steel balls 10 are provided to be fitted to the long grooves 11 and the holes 18.

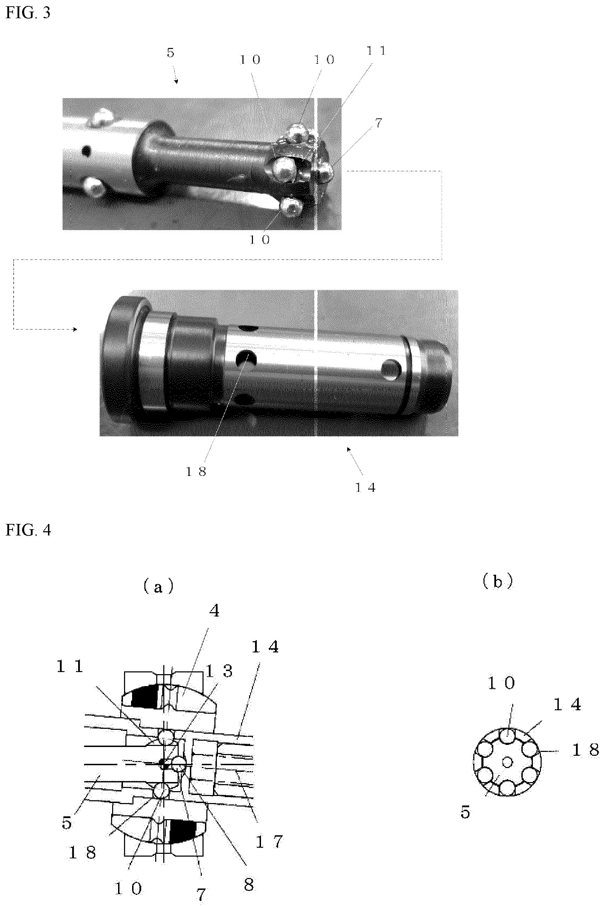

FIG. 3 shows the driving shaft 5 and the main drive shaft 14, illustrating that the driving shaft 5 is to be inserted into the main drive shaft 14 as shown in FIG. 1. The center steel ball 7 and the axial steel balls 10 are arranged at the head of the driving shaft 5, but this arrangement of the balls is an example for the sake of convenience. First, the center steel ball 7 is inserted into the position of the driving shaft 5 corresponding to the depression of the main drive shaft 14, and the axial steel balls 10 are inserted into the positions of the driving shaft 5 corresponding to the holes 18 of the main drive shaft 14. The driving shaft 5 is then inserted into the main drive shaft 14, which causes the center steel ball 7 to be housed in the depression in the center of the head of the driving shaft 5, and the axial steel balls 10 to be housed in the long grooves 11 of the driving shaft 5.

FIG. 4(a) is an enlarged internal view of a spherical bearing where the main drive shaft 14 and the holder 15 shown in FIG. 1 are tilted, and FIG. 4(b) is a diagram showing the arrangement of the axial steel balls. The center steel ball 7 is provided to be sandwiched between the depression in the center of the head of the driving shaft 5 and the opposite depression in the center of the rear end of the main drive shaft 14. The axial steel balls 10 are provided to be fitted on the outer surface of the driving shaft 5 and in the holes 18 of the main drive shaft 14. Referring to FIG. 4(a), a center 8 of the center steel ball 7 is positioned to be offset to the cutting tool 9 from a center 13 of the spherical bearing. The transition of the main drive shaft 14 from the tilted state to the unloaded state aligns the central axis of the driving shaft 5 to that of the main drive shaft 14 linearly. This is because a spring 12 shown in FIG. 2 biases the driving shaft 5 toward the cutting tool 9 in the axial direction, and the main drive shaft 14 is blocked from moving toward the cutting tool 9 by a case (not shown). Referring to FIG. 4(b), axial steel balls 10 are provided such that six balls are arranged to be fitted on the outer surface of the driving shaft 5 and in the holes 18 of the main drive shaft 14. The number of the axial steel balls 10 can be three to ten without limiting to six.

### Industrial Applicability

The present invention significantly reduces wear where friction occurs between the main drive shaft and the driving shaft, thereby extending the service life of a machining tool and making the tool more suitable for deburring.

### Description of Reference Numerals

- 1: pin
- 2: pin groove
- 3: universal joint rod
- 4: spherical bearing
- 5: driving shaft
- 6: upper shaft
- 7: center steel ball
- 8: center of center steel ball
- 9: cutting tool
- 10: axial steel ball
- 11: long groove
- 12: spring
- 13: center of spherical bearing
- 14: main drive shaft
- 15: holder
- 16: central axis
- 17: tilt axis
- 18: hole
- 100: machining tool

## Claims

1. A machining tool comprising:
an upper shaft (6) that is to be attached to a host device, through which torque is transmitted;
a main drive shaft (14);
a holder (15) that is to be inserted into a head of the main drive shaft (14), to which a cutting tool (9) is attached;
a spherical bearing (4) that supports an outer side of the main drive shaft (14) so that the main drive shaft (14) is tiltable;
a center steel ball (7); and
a plurality of axial steel balls (10); **characterised in that**
the machining tool further comprises a driving shaft (5) that is to be inserted into the upper shaft (6) to extend along the axis of the upper shaft (6); **in that**
the main drive shaft (14) is to be attached to a head of the driving shaft (5); **in that**
the center steel ball (7) is provided to be sandwiched between a depression in a center of the head of the driving shaft (5), and an opposite depression in a center of a rear end of the main drive shaft (14); and **in that**
the plurality of axial steel balls (10) are provided to long grooves (11) on an outer surface of the head of the driving shaft (5), and provided to holes (18) of the main drive shaft (14).

2. The machining tool according to Claim 1, further comprising a spring (12) that biases the driving shaft (5) in the axial direction, wherein a center (8) of the center steel ball (7) is positioned to be offset to the cutting tool (9) from a center (13) of the spherical bearing (4).

## Patentansprüche

1. Ein Bearbeitungswerkzeug, umfassend:
eine obere Welle (6), die an einer Trägervorrichtung angeordnet ist und über die ein Drehmoment übertragen wir;
eine Hauptantriebswelle (14);
eine Halterung (15), die in einen Kopf der Hauptantriebswelle (14) eingeführt wird, an dem ein Schneidewerkzeug (9) angeordnet ist;
ein Kugellager (4), das eine Außenseite der Hauptantriebswelle (14) stützt, so dass die Hauptantriebswelle (14) kippbar ist;
eine mittlere Stahlkugel (7); und
eine Vielzahl von axialen Stahlkugeln (10); **dadurch gekennzeichnet, dass**
das Bearbeitungswerkzeug weiterhin eine Antriebswelle (5) umfasst, die in die obere Welle (6) eingeführt wird, um sich entlang der Achse der oberen Welle (6) zu erstrecken; wobei
die Hauptantriebswelle (14) an einem Kopf der Antriebswelle (5) angeordnet ist; wobei
die mittlere Stahlkugel (7) derart angeordnet ist, sodass sie zwischen einer Vertiefung in der Mitte des Kopfes der Antriebswelle (5) und einer gegenüberliegenden Vertiefung in der Mitte eines hinteren Endes der Hauptantriebswelle (14) eingelegt ist; und wobei
die Vielzahl der axialen Stahlkugeln (10) in langen Nuten (11) an der Außenfläche des Kopfes der Antriebswelle (5) und in Löchern (18) der Hauptantriebswelle (14) angeordnet sind.

2. Bearbeitungswerkzeug gemäß Anspruch 1, weiterhin umfassend eine Feder (12), die die Antriebswelle (5) in axialer Richtung vorspannt, wobei ein Mittelpunkt (8) der mittleren Stahlkugel (7) derart positioniert ist, dass er gegenüber dem Schneidwerkzeug (9) von einem Mittelpunkt (13) des Kugellagers (4) versetzt ist.

## Revendications

1. Outil d'usinage comprenant :
un arbre supérieur (6) qui doit être fixé à un dispositif hôte, par le biais duquel est transmis un couple ;
un arbre de transmission principal (14) ;
un support (15) qui doit être inséré dans une tête de l'arbre de transmission principal (14), auquel est fixé un outil de découpe (9) ;
un palier sphérique (4) qui supporte un côté externe de l'arbre de transmission principal (14) de telle sorte que l'arbre de transmission principal (14) puisse être incliné ;
une bille d'acier centrale (7) ; et
une pluralité de billes d'acier axiales (10) ; **caractérisé en ce que**
l'outil d'usinage comprend en outre un arbre d'entraînement (5) qui doit être inséré dans l'arbre supérieur (6) pour s'étendre le long de l'axe de l'arbre supérieur (6) ; **en ce que**
l'arbre de transmission principal (14) doit être fixé à une tête de l'arbre d'entraînement (5) ; **en ce que**
la bille d'acier centrale (7) est disposée pour être prise en sandwich entre un creux dans un centre de la tête de l'arbre d'entraînement (5), et un creux opposé dans un centre d'une extrémité arrière de l'arbre de transmission principal (14) ; et **en ce que**
la pluralité de billes d'acier axiales (10) sont fournies à de longues rainures (11) sur une surface externe de la tête de l'arbre d'entraînement (5), et fournies à des trous (18) de l'arbre de transmission principal (14).

2. Outil d'usinage selon la revendication 1, comprenant en outre un ressort (12) qui pousse l'arbre d'entraînement (5) dans la direction axiale, dans lequel un centre (8) de la bille d'acier centrale (7) est positionné pour être décalé vers l'outil de découpage (9) depuis un centre (13) du palier sphérique (4).
